**Europäisches Patentamt**

**European Patent Office**

**Office européen des brevets**

(19)

(11) Veröffentlichungsnummer: **0 290 995**
**B1**

(12) **EUROPÄISCHE PATENTSCHRIFT**

(45) Veröffentlichungstag der Patentschrift:
08.08.90

(51) Int. Cl.⁵: **F16L 55/12**

(21) Anmeldenummer: **88107430.6**

(22) Anmeldetag: **09.05.88**

(54) **Rohrdichtkissen.**

(30) Priorität: **11.05.87 DE 3715645**

(43) Veröffentlichungstag der Anmeldung:
**17.11.88 Patentblatt 88/46**

(45) Bekanntmachung des Hinweises auf die Patenterteilung:
**08.08.90 Patentblatt 90/32**

(84) Benannte Vertragsstaaten:
**AT CH DE FR GB IT LI NL SE**

(56) Entgegenhaltungen:
**EP-A- 0 161 570**
**EP-A- 0 256 949**
**DE-A- 2 748 614**
**GB-A- 1 406 736**
**GB-A- 2 099 541**
**US-A- 3 459 230**
**US-A- 4 467 836**

(73) Patentinhaber: **Manfred Vetter GmbH, Burg Langendorf,**
**D-5352 Zülpich(DE)**

(72) Erfinder: **Vetter, Manfred, Burg Langendorf,**
**D-5352 Zülpich(DE)**

(74) Vertreter: **Bauer, Wulf, Dr., Wolfgang-Müller-Strasse 12,**
**D-5000 Köln 51 (Marienburg)(DE)**

## Beschreibung

Die Erfindung bezieht sich auf ein Rohrdichtkissen mit einem zylindrischen, äußeren Mantel aus armiertem Gummimaterial und zwei ebenfalls aus Gummimaterial gefertigten Stirnwänden, die durch Heißvulkanisation miteinander verbunden sind und einen dichten Innenraum begrenzen, welcher über einen Anschluß, insbesondere einen Luftanschluß in Form eines Rohrstutzens, der in einen Durchlaß einer der beiden Stirnwände eingesetzt ist, zugänglich ist, und im Innenraum in eine Ringscheibe aus Gummi übergeht, die mit der Innenseite der betreffenden Stirnwand luftdicht verbunden ist.

Derartige Rohrdichtkissen haben entweder rein zylindrische Form oder aber Ringform. Bei ringförmigen Rohrdichtkissen ist ein innerer, zumeist ebenfalls zylindrischer Mantel vorgesehen, in den ein rein zylindrisches Rohrdichtkissen eingesetzt werden kann. Weiterhin gibt es noch Rohrdichtkissen mit Verbindungsrohrleitungen zwischen den beiden Stirnwänden, derartige Rohrdichtkissen werden häufig auch als Prüfkissen bezeichnet. Diese Rohrdichtkörper dienen zum raschen Absperren von Rohrdichtleitungen, insbesondere schadhaften oder undicht gewordenen Teilstrecken. Die Rohrleitung kann oberhalb des zu prüfenden oder zu reparierenden Bereichs zuverlässig, praktisch und schnell abgedichtet werden. Auf diese Weise können Folgeschäden, insbesondere Umweltverschmutzung durch Ausbreiten oder Austreten von Abwässern oder anderen, grundwassergefährdenden Flüssigkeiten bei Rohrbrüchen usw. auf ein Minimum reduziert werden.

Das Rohrdichtkissen der eingangs genannten Art, das aus der deutschen Offenlegungsschrift DE-A 2 748 614 vorbekannt ist, hat becherförmige Stirnwände, deren ringartige zylindrische Wandbereiche nach innen gerichtet sind, mit ihren Außenflächen an der Innenfläche des Mantels anvulkanisiert sind und sich keilförmig zum freien Rand hin verjüngen. Der Mantel ist in Axialrichtung armiert. Bei diesem Kissen ist es nachteilig, daß es nicht in einem einzigen Vulkanisierungsschritt heißvulkanisiert werden kann. Vielmehr muß der Mantel erst mit einer der beiden Stirnwände verbunden werden, anschließend wird er in einem zweiten Vulkanisierungsschritt mit der zweiten Stirnwand verbunden, diese hat hierfür ein inneres, im Innenraum verbleibendes Stützteil.

Darüberhinaus ist die Verbindung zwischen dem Luftanschluß und der zugehörigen Stirnwand eine Schwachstelle, die sich insbesondere zeigt, wenn das Kissen öfter benutzt worden ist: Beim Aufblasen beult sich das Rohrdichtkissen im wesentlichen tonnenförmig aus. Der Mantel nimmt im Bereich der Längsmitte den größten Durchmesser an, von dieser Stelle aus nimmt der Durchmesser bis zu den Stirnwänden ab, die Stirnwände selbst bleiben im Außendurchmesser praktisch unverändert, beulen sich aber konvex nach außen aus. Dabei wird das am Rohrstutzen und seiner Ringscheibe befindliche Material der zugehörigen Stirnwand nach außen vom Rohrstutzen weggezogen. Der Durchlaß für den Rohrstutzen, der ohnehin eine Schwachstelle ist, weitet sich. Diese im Bereich des Rohrstutzens auftretende Dehnung führt, insbesondere nach einer Anzahl von Aufblasvorgängen, zu einer allmählichen Schwächung der Verbindung zwischen Rohrstutzen bzw. Ringscheibe und dem mit diesem verbundenen Bereich der Stirnwand. Die Verbindung wird zunehmend schwächer, es besteht die Gefahr, daß sie undicht wird.

Diesem Effekt ist bei dem vorbekannten Kissen der eingangs genannten Art dadurch begegnet worden, daß lediglich der Mantel, nicht aber die Stirnwände armiert sind. Hierdurch haben die Stirnwände grundsätzlich eine größere Elastizität als der Mantel, der durch seine Armierung in Armierungsrichtung praktisch nicht dehnbar ist. Diese Ausführung brachte jedoch dadurch Probleme, daß sich die Seitenwände, wenn sie mit derselben Materialstärke wie der Mantel ausgeführt werden, beim Aufblasen stark dehnen und dadurch wiederum Zugkräfte im Bereich des Luftanschlusses auftreten. Man hat die Stirnwände daher sehr dick ausgebildet, um eine Verformung zu vermeiden. Dann aber wird das Kissen schwer, es wird viel Material benötigt und die Verbindung zwischen Mantel und Stirnwänden wird kritisch und ist auf Dauer nicht zufriedenstellend zu lösen.

Bei dem aus der Patentschrift US-A 3 459 230 vorbekannten Rohrdichtkissen sind Mantel und Stirnwände zwar in einem einzigen Vulkanisierschritt zusammengefügt, hierzu wird aber ein inneres, metallisches, im wesentlichen dosenförmiges Stützgerüst benötigt, das ständig im Innenraum verbleibt. Dies ist nachteilig. Der Luftanschluß ist von außen auf eine Stirnwand aufgesetzt, dabei ist die mit dem aus Gummi gefertigten Rohrstutzen verbundene Ringscheibe exzentrisch außen auf eine Stirnwand aufvulkanisiert. Auch bei dieser Ausführung muß die Ringscheibe diejenigen Ausdehnbewegungen mitmachen, die die zugehörige Stirnwand beim Aufblasen erfährt. Die dabei auftretenden Dehnungen führen auf die Dauer zu einer Beschädigung der Verbindung zwischen Ringscheibe und Stirnwand, zumal durch die äußere Anordnung der Ringscheibe die Verbindung zwischen Ringscheibe und Stirnwand durch den Innendruck im Innenraum zusätzlich belastet wird. Dagegen wirkt der Innendruck bei einer an der Innenseite der Stirnwand angeordneten Ringscheibe im Sinne einer Verstärkung der Verbindung zwischen Ringscheibe und Stirnwand.

Ausgehend von dem Rohrdichtkissen der eingangs genannten Art liegt der Erfindung die Aufgabe zugrunde, die Nachteile dieses Rohrdichtkissens zu vermeiden und ein Rohrdichtkissen zu schaffen, das bei Herstellung in einem einzigen Vulkanisierungsschritt so ausgebildet ist, daß die Verbindung des Luftanschlusses mit der zugehörigen Stirnwand dauerfest ist, in dem die beim Füllen des Rohrdichtkissens stets auftretenden, dehnenden Kräfte so abgefangen werden, daß auch auf Dauer keine Undichtigkeit auftritt und die Stirnwände mit oder ohne Armierung und in beliebiger, vorzugsweise geringer Wandstärke hergestellt werden können.

Diese Aufgabe wird ausgehend von dem Rohrdichtkissen der eingangs genannten Art dadurch gelöst, daß die Ringscheibe nur im Bereich ihres Außenrandes mit der Innenfläche der Stirnwand verbunden ist und zwischen ihrem Innenrand bereich, an dem sie vorzugsweise einstückig mit dem Rohrstutzen zusammenhängt und dem Außenrandbereich ein ringförmiger Ausgleichsbereich freibleibt, wo die Ringscheibe weder mit dem Rohrstutzen noch mit der Innenfläche verbunden ist.

Der ringförmige Ausgleichsbereich fängt die zwangsläufig beim Füllen des Rohrdichtkissens auftretenden Dehnungen ab und vermeidet, daß sie sich nachteilig auf die Dichtigkeit auswirken können. Beim Füllen des Rohrdichtkissens beult sich die Stirnwand aus und weitet sich der Durchlaß des Rohrstutzens, da im Bereich des Durchlasses nun aber keine dichtzuhaltende Verbindung mehr besteht, hat diese Bewegung keinen Einfluß auf die Dichtigkeit. Der Rohrstutzen ist nicht mehr unmittelbar mit der Stirnwand verbunden, sondern es wird eine relativ große Ringscheibe verwendet, die jedenfalls größer ist als die bisher benutzten Ringscheiben, die durch ihren Ausgleichsbereich alle anfallenden Bewegungen aufnimmt und ausgleicht. Durch den Innendruck wird der Ausgleichsbereich gegen die Innenfläche der Stirnwand gepreßt und dadurch abgestützt, auf diese Weise kann der Ausgleichsbereich aus einem relativ elastischen Material gefertigt sein und bevorzugt auf seine Ausgleichsfunktion abgestellt werden, da er mechanisch praktisch nicht belastet wird.

Bei der beschriebenen Konstruktion kann der Rohrstutzen in Längsrichtung etwas gegenüber der Stirnwand bewegt werden, insbesondere in den Innenraum hineingedrückt werden. Beim praktischen Betrieb wirkt sich diese relative Bewegbarkeit gegenüber der Stirnwand nicht negativ aus, da die Ringscheibe durch den Innendruck gegen die Stirnwand gepreßt wird. Um nun aber zu vermeiden, daß insbesondere bei nicht aufgeblasenem Rohrdichtkissen durch eine Ungeschicklichkeit oder Unwissenheit der Rohrstutzen zu weit in den Innenraum gedrückt wird und dadurch die Verbindung der Ringscheibe mit der Stirnwand beansprucht wird, wird in einer Weiterentwicklung vorgeschlagen, den Rohrstutzen außerhalb des Durchlasses soweit zu verstärken, daß er aufgrund dieser Verstärkung praktisch nicht mehr, jedenfalls nur geringfügig und ohne die genannte Verbindung zu belasten, in den Innenraum des Rohrdichtkissens gedrückt werden kann. Im einzelnen ist ein Anschlag vorgesehen, der insbesondere als Mutter oder Scheibe ausgeführt ist und sich an der Außenseite der Stirnwand am Rohrstutzen befindet.

Der Rohrstutzen kann als ein Metall-oder als ein Gummiteil ausgeführt sein. Bei einer Ausbildung als Metallteil wirkt sich die erfindungsgemäße Anordnung besonders positiv aus, da Metall eine wesentlich geringere Elastizität als selbst starkes und armiertes Gummimaterial hat und gerade bei Gummi-Metall-Verbindungen im Bereich des Luftanschlusses erhebliche Probleme bei Rohrdichtkissen nach dem Stand der Technik auftreten. Vorteilhafterweise hat der Rohrstutzen ein Außengewinde, das den Anschlag in Form beispielsweise einer Mutter aufnimmt und zugleich der Verbindung mit einem Anschlußschlauch oder einem Ventil dient. Der Rohrstutzen geht im Innenraum in einen etwas breiteren Kragen über, um eine möglichst große Verbindungsfläche mit der Ringscheibe zu erreichen. Da die Verbindung zwischen metallischem Rohrstutzen und Ringscheibe aus Gummi jedoch mechanisch beim Aufblasen nicht belastet wird, weil die auftretende Dehnung durch den Ausgleichsbereich abgefangen wird, ist die Metall-Gummi-Verbindung auch noch nach sehr häufiger Benutzung des Rohrdichtkissens dicht.

Bei einem Rohrstutzen aus Gummi ist eine gewisse Elastizität gegeben, auch hier wird aber die Dichtigkeit durch den Ausgleichsbereich verbessert. Rohrstutzen aus Gummi haben den Vorteil, daß metallische Anschlußstücke für Druckluftschläuche ausgewechselt werden können, wenn das Gewinde verbraucht ist oder dergleichen. Dies bei metallischen Rohrstutzen nur durch Nachschneiden des Gewindes zu erreichen.

Vorzugsweise ist der Mantel aus einem Zuschnitt aus armiertem Gummimaterial gefertigt, das entweder nur in einer, nämlich der Axialrichtung, oder kreuzweise armiert ist, wobei dann aber die Armierungsrichtungen in möglichst großem Winkel zur Axialrichtung (Mantellinie) verlaufen. Eine derartige Armierung auf Schraubenlinien hat den Vorteil, daß der Mantel gleichmäßiger armiert ist als bei Armierung in nur einer Richtung, sich aber trotzdem insbesondere in seinem Mittelbereich gut ausdehnen kann. Vorteilhafterweise ist der Zuschnitt aus dem armierten Gummimaterial etwas länger, als für die eigentliche Länge des Kissens benötigt wird. Die überstehenden Bereiche werden in die Flächen der Stirnwände umgelegt und bilden einen Bestandteil der Stirnwände, die Stirnwände werden durch die Armierungen günstig ausgesteift. Dabei wird zugleich der Verbindungsbereich zwischen Stirnwand und Mantel dauerfest.

Sehr vorteilhaft ist es, den Stirnwänden von vornherein eine konvexe Wölbung mitzugeben und damit die Wölbung bereits weitgehend vorzugeben, die die Stirnwände ohnehin beim Aufblasen des Kissens einnehmen. Als vorteilhaft hat es sich erwiesen, den Krümmungsradius der Stirnwände etwa im Bereich der halben Gesamtlänge des Kissens anzusiedeln. Auf jeden Fall sollte der Radius größer sein als der Radius des entspannten zylindrischen Mantels. Durch die vorzugsweise als Kugelkappen ausgebildeten Stirnwände werden die Dehnungsbewegungen beim Aufblasen zusätzlich verringert, so daß auch hierdurch die Dichtigkeit im Bereich des Luftanschlusses verbessert wird.

Schließlich hat es sich als vorteilhaft erwiesen, zumindest eine Stirnwand aus zwei identischen, relativ dünnen Stirnwandscheiben zu fertigen. Dabei werden mechanische Befestigungsmittel, wie sie für die Handhabung des Rohrdichtkissens in einer Rohrleitung notwendig sind, lediglich mit der äußeren Stirnwandscheibe verbunden. Sie ragen daher nicht - wie beim Rohrdichtkissen nach dem Stand der Technik - in den Innenraum hinein, so daß durch sie die Dichtigkeit des Innenraums nicht beeinträchtigt werden kann. Ein Verankerungsteil einer Zugöse befindet sich zwischen den beiden Stirnwandscheiben und bewirkt eine großflächige Verteilung der Zug- bzw. Druckkräfte, die an einem Ring oder dergleich der Zugöse ausgeübt werden. Um die Kippkräfte zu minimieren, hat es sich als vorteilhaft erwiesen, zwischen Ring der Zugöse und dem Verankerungsteil einen gelenkigen oder elastischen Bereich anzuordnen, so daß sich der Ring der Zugöse in die Zugrichtung bzw. Druckrichtung einstellen kann, ohne daß das Verankerungsteil sich mitbewegen muß.

Der Kompensationsring kann auch ähnlich einem Faltenbalg ausgebildet sein, beispielsweise aus Ringscheiben aufgebaut sein, wobei der Innenrandbereich des zweiten, zusätzlichen Ausgleichsringes mit der Stirnwand verbunden ist und beide Ringscheiben an ihrem Außenrand dicht miteinander verbunden sind.

Weitere Vorteile und Merkmale der Erfindung erheben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:

Fig. 1 ein Teilstück eines Axialschnittes durch ein als Prüfkissen ausgebildetes Rohrdichtkissen, bei dem ein Luftanschluß und ein Anschluß für eine die beiden Stirnwände durchsetzende Rohrleitung vorgesehen ist, beide Anschlüsse sind erfindungsgemäß ausgebildet, sie haben metallische Rohrstutzen,

Fig. 2 eine Ansicht entsprechend Fig. 1, jedoch mit nur einem, zentrischen Anschluß in Form eines Luftanschlusses und einem als Gummiteil ausgebildeten Rohrstutzen.

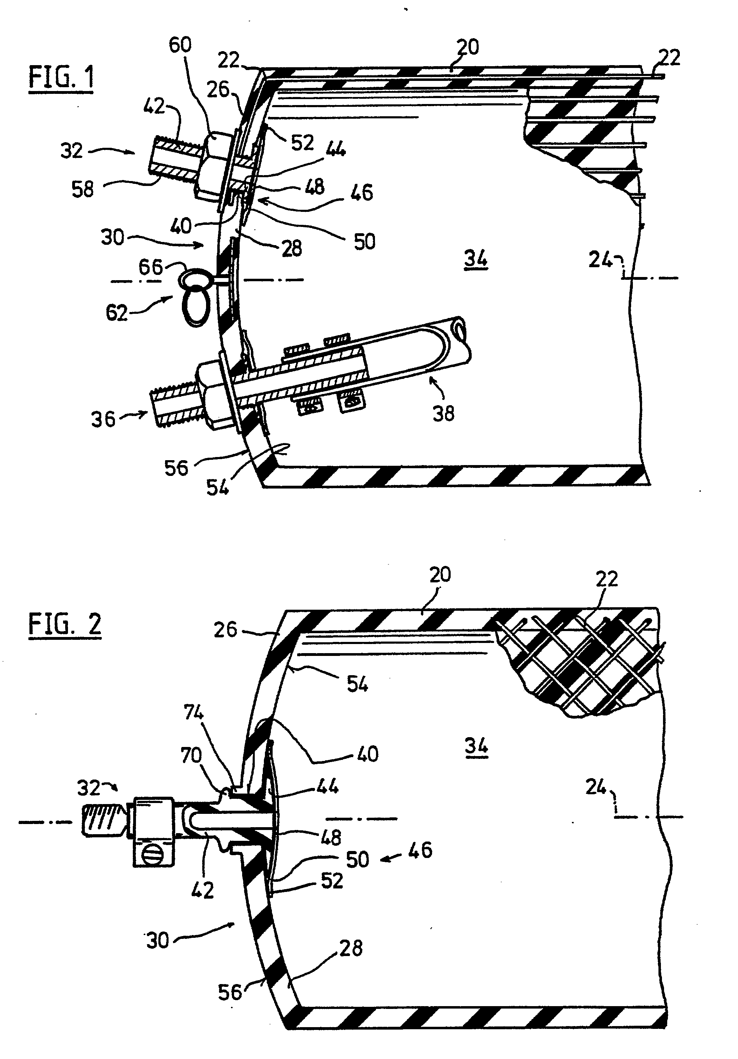

Die Rohrdichtkissen sind jeweils im ungefüllten Zustand gezeigt, in diesem Zustand ist ihr äußerer Mantel 20 zylindrisch. Der Mantel 20 ist aus einem Zuschnitt aus bahnförmigem Gummimaterial hergestellt, der eine innenliegende Armierung aus linearen Armierungselementen hat. Diese Armierungsfäden 22 sind aus Stahlcord, Polyamid, Aramid oder Polyester den oder dergleichen ausgeführt. Im Ausführungsbeispiel nach Fig. 1 sind lediglich in Axialrichtung 24 verlaufende Armierungsfäden vorgesehen, rechtwinklig hierzu, also in Umfangsrichtung ist der Mantel 20 gemäß Fig. 1 nicht armiert. Er kann auch in dieser Richtung armiert sein, die Armierung ist aber dann wesentlich schwächer als die gezeigten Armierungsfäden 22 und besteht beispielsweise aus einem textilen, dehnbaren Garn.

Im Ausführungsbeispiel nach Fig. 2 sind zwei sich rechtwinklig kreuzende Scharen von Armierungsfäden 22 vorgesehen, die im Winkel von 45 Grad zur Mittelachse 24 verlaufen und auf diese Weise einen Schraubenlinienverlauf haben, der einmal einem Rechtsgewinde, einmal einem Linksgewinde entspricht.

Der den Mantel 20 bildende Zuschnitt ist länger gewählt, als eigentlich für die Ausbildung des Mantels 20 selbst notwendig ist. Die überstehenden Bereiche werden stirnseitig eingeschlagen und bilden zusammen mit mindestens einer Stirnwandkappe 28 die Stirnwände 30, von denen in den Figuren jeweils nur die Linke gezeigt ist. Der Zuschnitt des Mantels ist im Vergleich zur Axiallänge des fertigen Rohrdichtkissens etwa um den Durchmesser dieses Rohrdichtkissens länger. Dies bedeutet, daß seine Armierungsfäden 22 bis etwa zur Achslinie 24 reichen. Sie können sich dort überschneiden, es kann aber auch ein zentrischer Mittelbereich der Stirnwand 30 unarmiert bleiben. Damit die Stirnwand 30 durch die eingeschlagenen Bereich 26 nicht in Nähe der Mittelachse zunehmend dicker wird, wird vor dem Umschlagen Gummimaterial entfernt, beispielsweise ein Zackenschnitt am Rand des Zuschnittes ausgeführt. Dabei wird jedoch beachtet, daß die Armierungsfäden 22 selber nicht beschädigt werden, es wird lediglich Gummimaterial entfernt.

Die in den Figuren gezeigten Rohrdichtkissen werden in einem einzigen Vulkanisierungschritt hergestellt. Sie werden während dieses Vulkanisierschrittes mit Luft gefüllt, wodurch sich das vorkonfektionierte, bereits luftdichte Kissen zu einer homogenen Einheit verbindet.

In den Ausführungsbeispielen nach den Figuren 1 und 2 ist jeweils ein Luftanschluß 32 vorgesehen, durch den den Innenraum 34 mit Luft oder einem anderem Medium gefüllt bzw. entleert werden kann. Zusätzlich hat das Ausführungsbeispiel nach Fig. 1, das ein Prüfkissen ist, einen Anschluß 36 für eine das gesamte Kissen durchquerende Rohrleitung 38.

Es wird zunächst der Luftanschluß 32 des Ausführungsbeispiels nach Fig. 1 beschrieben: In einen Durchlaß 40 in Form eines Lochs der Stirnwand 30 ist ein metallischer Rohrstutzen 42 gesteckt, der an seinem im Innenraum 34 befindlichen Endbereich einstückig in einen scheibenförmigen Kragen übergeht, der zugleich diesen Endbereich bündig abschließt. Dieser Kragen 44 verhindert, daß der Rohrstutzen aus dem Durchlaß 40 herausgezogen werden kann und dient insbesondere der Abdichtung. Hierzu ist er auf seiner nach innen gerichteten Ringfläche mit einer Ringscheibe 46 aus unarmiertem Gummi verbunden, diese Ringscheibe 46 ist relativ dünn und hat eine deutlich größere Elastizität als die angrenzenden Teile 42, 30. Sie ist in einem Innenrandbereich 48 ringförmig und flächig sowie luftdicht mit der nach innen weisenden Ringfläche des Kragens 44 verbunden. Außerhalb dieses Innenrandbereichs hat sie einen konzentrischen und damit ebenfalls ringförmigen Ausgleichsbereich 50, in diesem Bereich ist die Ringscheibe 46 nicht mit einem anderen Teil verbunden. Außerhalb dieses Ausgleichsbereichs befindet sich schließlich ein ebenfalls ringförmiger Außenrandbereich 52, dort ist sie (auf ihrer selben Seite wie am Innenrandbereich 48) mit der Innenfläche 54 der Stirnwand 30 dicht verbunden. Der Rohrstutzen 42 einschließlich seines Kragens 44 kann, muß aber nicht mit der Innenwand des Durchlasses 40 bzw. der Innenfläche 54 verbunden sein. Wenn er verbunden ist, so dient dies nur der mechanischen Befestigung, da die Abdichtung bereits über die Verbindungen der beiden Bereiche 50, 54 erfolgt.

Der Kragen 44 ist relativ flach und hat einen Außendurchmesser, der etwa dem doppelten Außendurchmesser des Rohrstutzens 42 entspricht. Seine Außenränder sind gerundet, damit er nicht in Gummimaterial einschneiden kann. Der Rohrstutzen ragt wenige Zentimeter gegenüber der Außenfläche 56 der Stirnwand 30 vor, dort hat er auch ein Außengewinde 58, auf das eine Scheibe und eine Mutter 60 aufgeschraubt sind. Sie verhindern, daß der Rohrstutzen 42 nach innen gedrückt werden kann, so daß insgesamt durch Zusammenwirken von Kragen 44 und Mutter 60 der Rohrstutzen 42 befestigt ist. Der gegenüber der Mutter 60 vorstehende, freie Endbereich des Rohrstutzens 42 dient dem Anschluß eines Druckluftschlauches, der Aufnahme eines Ventils oder dergleichen.

Der Anschluß 36 für die Rohrleitung 38 ist ebenso aufgebaut wie der beschriebene Luftanschluß 32. Der Unterschied zu diesem besteht nur darin, daß der Rohrstutzen nach innen gegenüber seinem Kragen 44 vorsteht, der innen überstehende Bereich wird für die ansich bekannte Verbindung mit einem flexiblen Schlauch genutzt.

Die beiden Anschlüsse 32, 36 sind etwa mittig zwischen der Mittelachse 24 und dem vom Manteläußeren beschriebenen Zylinder angeordnet. Auf der Achslinie 24 selbst befindet sich eine Zugöse 62. Diese ist wie folgt aufgebaut: Die Stirnwand 30 ist aus einer innenliegenden Stirnwandkappe 28, die bis zur inneren Oberfläche des Mantels 20 reicht, und einem umgeschlagenen Bereich 26 des Mantelzuschnitts gefertigt. Zwischen beiden ist ein Verankerungsteil in Form eines kugelkappenförmigen Tellers 64 angeordnet. Von ihm springt nach außen und durch den Bereich 26 ein Stift vor, der in ein außenliegendes Auge 66 übergeht. Dieses umschließt wiederum einen Ring 68, an dem eine Zugkraft ausgeübt werden kann. Aufgrund der beschriebenen Anordnung befindet sich die Zugöse außerhalb des Abdichtungsbereiches und kann daher die Dichtheit des Rohrkissens mit beeinflussen.

Der Luftanschluß 32 im Ausführungsbeispiel nach Fig. 2 unterscheidet sich nur dadurch von seinem Pendant in Fig. 1, daß der Rohrstutzen 42 aus Gummi gefertigt ist. Er geht ebenfalls einstückig und innenseitig in einen Kragen 44 über, der sich jedoch nach außen verjüngt. Die beschriebenen Verbindungen zur Ringscheibe 46 sind jedoch wiederum identisch. Anstelle der Mutter 60 sichert eine aufvulkanisierte Wulst 70 den Rohrstutzen 42 gegen ein Eindrücken in den Innenraum 34. Am äußeren Endbereich des Rohrstutzens ist ein Metallrohrstück 72 mit Außengewinde und mittels einer Schlauchklemme befestigt, es ist aufgrund dieser Konstruktion austauschbar. Die Stirnwand 30 hat eine konzentrische Stufe 74, die eine lokale Verdickung der Wandstärke der Stirnwand bewirkt und eine verlängerte Führung des Rohrstutzens 42 bildet. Derartige Stufen haben sich auch für metallische Rohrstutzen 42 bewährt, sie verringern die Möglichkeit, die Rohrstutzen 42 seitlich auszulenken.

Die Stirnwände sind konvex gekrümmt und als Kugelkappen ausgebildet, deren Krümmungsradius dem halben Abstand der beiden Stirnwände bei im freien Zustand (außerhalb eines Rohres) aufgeblasenen Rohrdichtkissen entspricht.

## Patentansprüche

1. Rohrdichtkissen mit einem zylindrischen, äußeren Mantel (20) aus armiertem Gummimaterial (Armierungsfäden 22) und zwei aus Gummimaterial gefertigten Stirnwänden (30), die durch Heißvulkanisation miteinander verbunden sind und einen dichten Innenraum (34) begrenzen, welcher über einen Anschluß (32, 36) in Form eines Rohrstutzens (42), der in einen Durchlaß (40) einer der beiden Stirnwände (30) eingesetzt ist, zugänglich ist, und im Kissenraum in eine Ringscheibe übergeht, die mit der Innenfläche (54) der betreffenden Stirnwand (30) luftdicht verbunden ist, dadurch gekennzeichnet, daß die Ringscheibe (46) nur im Bereich ihres Außenrandes (52) mit der Innenfläche (54) der Stirnwand (30) verbunden ist und zwischen ihrem Innenrandbereich (48), an dem sie vorzugsweise einstückig mit dem Rohrstutzen (42) zusammenhängt und diesem Außenrandbereich (52) ein ringförmiger Ausgleichsbereich (50) freibleibt, wo die Ringscheibe (46) weder mit dem Rohrstutzen (42) noch mit der Innenfläche (54) verbunden ist.

2. Rohrdichtkissen nach Anspruch 1, dadurch gekennzeichnet, daß sich auf dem Rohrstutzen (42) an der Außenfläche (56) der Stirnwand (30) ein Anschlag (Mutter 60, Wulst 70) befindet, der vorzugsweise unter Vorspannung an der Stirnwand (30) anliegt und ein Eindrücken des Rohrstutzens (42) in den Innenraum (34) verhindert.

3. Rohrdichtkissen nach Anspruch 1 oder 2, dadurch gekennzeichnet, daß der Rohrstutzen (42) ein Metallteil ist, das ein Außengewinde (58) aufweist und im Innenraum vorzugsweise einstückig einen Kragen (44) ausbildet, der an seiner innenseitigen Fläche mit dem Innenrandbereich (48) der Ringscheibe (46) verbunden ist.

4. Rohrdichtkissen nach Anspruch 1 oder 2, dadurch gekennzeichnet, daß der Rohrstutzen (42) ein Gummiteil ist, in das am freien, außerhalb des Innenraums (34) befindlichen Endbereich ein Metallrohrstück (72) auswechselbar eingespannt ist und das einen im Innenraum befindlichen Kragen (44) hat, der vorzugsweise sich zu seinem Außenrand hin verjüngt und an seiner innenseitigen, ringförmigen Fläche mit dem Innenrandbereich (48) der Ringscheibe (46) verbunden ist.

5. Rohrdichtkissen nach einem der Ansprüche 1 bis 4, dadurch gekennzeichnet, daß die Ringscheibe (46) zumindest in ihrem ringförmigen Ausgleichsbereich (50) aus einem Material gefertigt ist, das eine höhere Dehnbarkeit als das Material der benachbarten Stirnwand (30) hat.

6. Rohrdichtkissen nach einem der Ansprüche 1 bis 5, dadurch gekennzeichnet, daß der Mantel (20) aus einem Teilbereich eines rechteckförmigen Zuschnitts aus armiertem Gummimaterial gefertigt ist, der nur in einer, nämlich der Axialrichtung, armiert ist und daß die Stirnwände (30) aus Stirnwandkappen (28) und den auf deren Außenfläche aufgelegten und durch Vulkanisieren verbundenen, armierten, umgeschlagenen Bereichen (26) des Zuschnitts gebildet sind.

7. Rohrdichtkissen nach einem der Ansprüche 1 bis 5, dadurch gekennzeichnet, daß der Mantel (20) aus einem Teilbereich eines rechteckförmigen Zuschnitts aus armiertem Gummimaterial gefertigt ist, der in zwei sich vorzugsweise rechtwinklig kreuzenden Richtungen armiert ist, wobei die Armierungsfäden (22) beider Richtungen einen möglichst großen Winkel mit der Mittelachse (24) einschließen, länger als die axiale Gesamtlänge des Rohrdichtkissens ist und den auf deren Außenfläche die Stirnwände aus Stirnwandscheiben und auf deren Außenfläche aufgelegten und mit ihr durch Vulkanisieren verbundenen armierten Endbereichen des Zuschnitts gebildet sind.

8. Rohrdichtkissen nach Anspruch 6 oder 7, dadurch gekennzeichnet, daß die Armierungsfäden (22) der für die Stirnwände (30) verwendeten Teilbereiche des Zuschnitts bis kurz vor die Mittelachse (24) reichen und daß vor dem Umschlagen der Bereiche (26) soviel Gummimaterial entfernt ist, daß die Stirnwände (30) im wesentlichen eine konstante Dicke haben.

9. Rohrdichtkissen nach einem der Ansprüche 1 bis 8, dadurch gekennzeichnet, daß die Stirnwände (30) eine konvexe Wölbung aufweisen und vorzugsweise als Kugelkappen ausgebildet sind, deren Radius größer ist als der Radius des (entspannten) zylindrischen Mantels (20) und vorzugsweise etwa der halben Gesamtlänge des Rohrdichtkissens entspricht.

10. Rohrdichtkissen nach einem der Ansprüche 1 bis 9, dadurch gekennzeichnet, daß in zumindest einer Stirnwand (30) eine Zugöse (62) oder ein entsprechendes Befestigungsteil angeordnet ist, das ein im wesentlichen scheibenförmiges Verankerungsteil (64) aufweist, wobei dieses Verankerungsteil (64) sich zwischen der Stirnwandkappe (28) und den umgeschlagenen Bereichen (26) befindet und nach außen durch ein Loch im umgeschlagenen Bereich (26) mit einem Auge (66) verbunden ist.

11. Rohrdichtkissen nach Anspruch 10, dadurch gekennzeichnet, daß die Zugöse (62) einen Ring (68) hat, der elastisch oder gelenkig mit dem Verankerungsteil (64) verbunden ist.

12. Rohrdichtkissen nach einem der Ansprüche 1 bis 11, dadurch gekennzeichnet, daß sich der Anschluß (32, 36) außerhalb der Mittelachse (24) befindet und vorzugsweise mittig zwischen der Mittelachse (24) und dem Zylinder des Mantels (20) angeordnet ist.

## Claims

1. A pipe sealing pad having a cylindrical, external sleeve (20) made of reinforced rubber material (reinforcing threads 22) and two end-walls (30) which are made of rubber material and which are linked together by heat-vulcanization and which define an air-tight compartment (34); said air-tight compartment is accessible by means of a connection (32, 36) in the form of a pipe-fitting (42) inserted in an opening (40) in one of the two end-walls (30), and in the compartment the pipe-fitting (42) is linked to a ring disk which is linked to the inner surface (54) of the relevant end-wall (30) so as to be air-tight; characterized in that only the outer edge (52) of the ring disk (46) is in contact with the inner surface (54) of the end-wall (30), and between the inner edge area (48) of the ring disk (46), where the ring disk is attached as one piece to the pipe-fitting (42), and the outer edge (52) there is thereby created an annular compensation zone (50) where the ring disk (46) is not in contact with either the pipe-fitting (42) or the inner surface (54).

2. A pipe sealing pad according to claim 1, characterized in that a stop in form of a nut (60) or a rubber protrusion (70) is situated on the pipe-fitting (42) on the outside surface (56) of the end-wall (30), said stop being fitted preferably under initial tension against the end-wall (30), thereby preventing any movement of the pipe-fitting (42) into the air-tight compartment (34).

3. A pipe sealing pad according to claim 1 or 2, characterized in that the pipe-fitting (42) is a piece of metal that has an external thread (58) and the inner area thereof is shaped to form a collar (44) which is preferably one-pieced and which on its inner surface is connected to the inner area (48) of the ring-disk (46).

4. A pipe sealing pad according to one of the claims 1 to 3, characterized in that the pipe-fitting (42) is a rubber component into which a metal pipe section (72) which can be exchanged is attached at the free end which is outside the air-tight compartment (34), said rubber component having in the inner area a collar (44) which is preferably tapered towards its outer edge and which on its internal, ring-shaped surface is connected to the inner edge area (48) of the ring disk (46).

5. A pipe sealing pad according to one of the claims 1 to 4, characterized in that the ring-disk (46) at least in the vicinity of its ring-shaped compensation zone (50) is made of a material that has greater elasticity than the material of the neighboring end wall (30).

6. A pipe sealing pad according to one of the claims 1 to 5, characterized in that the sleeve (20) is made of part of a rectangular-shaped section of reinforced rubber material which is reinforced in only one direction, namely axially and that the end-walls (30) are formed of wall-caps (28) and those reinforced parts (26) of the said section which have been turned back, placed on the outer surface of the end-caps (28) and, through vulcanization, connected thereto.

7. A pipe sealing pad according to one of the claims 1 to 6, characterized in that the sleeve (20) is made of part of a rectangular section of reinforced rubber material which is reinforced in two directions at preferably right-angles to each other, the reinforcing threads (22) of both directions forming with the middle axle the greatest possible angle (24); which section is longer than the total axial length of the pad and in that the reinforced end portions of the section are posed on the outer surfaces of wall-caps (28) and vulcanized thereto.

8. A pipe sealing pad according to claim 6 or 7, characterized in that the reinforcing threads (22) of the parts of the rectangular section used for the walls (30) extend almost to the middle axis (24) and that before the parts (26) are bent back sufficient rubber material is removed so that the end-walls (30) display an essentially uniform thickness.

9. A pipe sealing pad according to one of the claims 1 to 8, characterized in that the end-walls (30) show a convex configuration and are preferably spherical caps the radius of which is greater than the radius of the cylindrical sleeve when not under tension (20) and preferably is about half the total length of the pipe sealing pad.

10. A pipe sealing pad according to one of the claims 1 to 9, characterized in that to at least one of the end-walls (30) is attached an eye (62) or a similar fixation component which essentially is a disk-shaped achoring attachment (64) being both sited between the wall-cap (28) and the parts (26) which have been bent back, and also linked to an eye (66) on the outside through an aperture in the parts which has been bent back (26).

11. A pipe sealing pad according to claim 10, characterized in that the eye (62) is fitted with a ring (68) which, elastically or by means of joints, is connected to the anchoring attachment (64).

12. A pipe sealing apparatus according to one of the claims 1 to 11, characterized in that the connection (32, 36) is sited outside of the middle axis (24) and is preferably arranged in the middle between the middle axis (24) and the cylinder of the sleeve (20).

## Revendications

1. Coussin d'étanchéité pour tuyau, comportant une enveloppe (20) cylindrique extérieure en matériau de caoutchouc armé (fils d'armure 22) et deux parois d'extrémité (30) fabriquées en matériau de caoutchouc, qui sont unies entre elles par vulcanisation à chaud et qui délimitent un compartiment (34) intérieur étanche, auquel on accède par l'intermédiaire d'un raccordement (32, 36) sous la forme d'une tubulure (42), qui est insérée dans un passage (40) de l'une des deux parois d'extrémité (30) et se transforme dans le compartiment du coussin, en un disque annulaire qui est relié avec effet d'étanchéité, à la surface intérieure (54) de la paroi d'extrémité (30) correspondante, caractérisé par le fait que le disque annulaire (46) n'est relié à la surface intérieure (54) de la paroi d'extrémité (30) que dans la zone de son bord extérieur (52) et, qu'entre sa zone de bord intérieur (48) où il est de préférence solidaire en une pièce avec la tubulure (42) et la zone de bord extérieur (52) de celui-ci, une zone de compensation annulaire (50) demeure libre, où le disque annulaire (46) n'est relié ni à la tubulure (42) ni à la surface intérieure (54).

2. Coussin d'étanchéité pour tuyau selon la revendication 1, caractérisé par le fait que, sur la tubulure (42), à la surface extérieure (56) de la paroi d'extrémité (30), se trouve une butée (écrou 60, renflement 70) laquelle est de préférence appliquée sous tension initiale à la paroi d'extrémité (30) et empêche l'enfoncement de la tubulure (42) dans le compartiment intérieur (34).

3. Coussin d'étanchéité pour tuyau selon la revendication 1 ou la revendication 2, caractérisé par le fait que la tubulure (42) est une pièce métallique qui présente un filetage extérieur (58) et constitue, dans le compartiment intérieur de préférence en une seule pièce, une collerette (44), laquelle est reliée, à sa surface intérieure, à la zone de bord intérieur (48) du disque annulaire (46).

4. Coussin d'étanchéité pour tuyau, selon la revendication 1 ou la revendication 2, caractérisé par le fait que la tubulure (42) est une pièce de caoutchouc, dans laquelle, sur la zone d'extrémité libre se trouvant à l'extérieur du compartiment intérieur (34) une pièce de tube métallique (72) est montée de façon à pouvoir être remplacée, et qui présente une collerette (44) se trouvant dans le compartiment intérieur, laquelle s'amincit en direction de son bord extérieur et est reliée, à sa surface annulaire intérieure, à la zone de bord intérieur (48) du disque annulaire (46).

5. Coussin d'étanchéité selon l'une des revendications 1 à 4, caractérisé par le fait que le disque annulaire (46), au moins dans sa zone de compensation (50) annulaire est fabriqué en un matériau dont l'extensibilité est supérieure à celle du matériau de la paroi d'extrémité (30) adjacente.

6. Coussin d'étanchéité pour tuyau selon l'une des revendications 1 à 5, caractérisé par le fait que l'enveloppe (20) est fabriquée à partir d'une zone partielle d'une coupe rectangulaire d'un matériau de caoutchouc armé, armé dans un seul sens, à savoir le sens axial, et que les parois d'extrémité (30) sont formées à partir de calottes (28) de parois d'extrémité et des zones (26) retournées, armées de la coupe, superposées à leur surface extérieure et liées par vulcanisation.

7. Coussin d'étanchéité pour tuyau selon l'une des revendications 1 à 5, caractérisé par le fait que l'enveloppe (20) est fabriquée à partir d'une zone partielle d'une coupe rectangulaire d'un matériau de caoutchouc armé, lequel est armé dans deux sens se croisant de préférence à angle droit, les deux fils d'armure dans les deux sens formant avec l'axe médian (24) un angle aussi grand que possible, est plus longue que la longueur axiale totale du coussin d'étanchéité pour tuyau et que les parois d'extrémité à leur surface extérieure sont formées de disques de parois d'extrémité et des zones d'extrémité de la coupe, armées, superposées à leur surface extérieure et liées à elle par vulcanisation.

8. Coussin d'étanchéité pour tuyau selon la revendication 6 ou la revendication 7, caractérisé par le fait que les fils d'armure (22) des zones partielles de la coupe utilisées pour les parois d'extrémité (30) vont jusqu'à proximité de l'axe médian et que, avant le retournement des zones (26) une quantité de matériau de caoutchouc est ôtée pour que les parois d'extrémité (30) aient une épaisseur sensiblement constante.

9. Coussin d'étanchéité pour tuyau selon l'une des revendications 1 à 8, caractérisé par le fait que les parois d'extrémité (30) présentent une courbure convexe et sont conformées de préférence en segment sphérique à une base, dont le rayon est plus grand que le rayon de l'enveloppe cylindrique (20) sans tension, et correspond de préférence à environ la demi-longueur du coussin d'étanchéité pour tuyau.

10. Coussin d'étanchéité pour tuyau selon l'une des revendications 1 à 9, caractérisé par le fait que, sur au moins une paroi d'extrémité (30) il est disposé un oeillet de traction (62) ou une pièce de fixation correspondante, présentant une pièce d'ancrage (64) essentiellement en forme de disque, cette pièce d'ancrage (64) se trouvant entre la calotte (28) de la paroi d'extrémité et les zones repliées (26) et étant reliée à un oeillet (66) vers l'extérieur, en traversant un trou pratiqué dans la zone repliée (26).

11. Coussin d'étanchéité pour tuyau selon la revendication 10, caractérisé par le fait que l'oeillet de traction (62) comporte un anneau (68) qui est lié de façon élastique ou articulée avec la pièce d'ancrage (64).

12. Coussin d'étanchéité pour tuyau selon l'une des revendications 1 à 11, caractérisé par le fait que le raccordement (32, 36) se trouve en dehors de l'axe médian (24) et est disposé de préférence en position médiane entre l'axe médian (24) et le cylindre de l'enveloppe (20).

FIG. 1

FIG. 2